(19) Europäisches Patentamt / European Patent Office / Office européen des brevets

(11) **EP 4 249 985 B1**

(12) # EUROPEAN PATENT SPECIFICATION

(45) Date of publication and mention
of the grant of the patent:
**24.07.2024 Bulletin 2024/30**

(21) Application number: **23158721.3**

(22) Date of filing: **27.02.2023**

(51) International Patent Classification (IPC):
**G02B 26/08** *(2006.01)* **G02B 26/12** *(2006.01)*

(52) Cooperative Patent Classification (CPC):
**G02B 26/127; G02B 26/0858**

(54) **MICROMIRROR DEVICE AND OPTICAL SCANNING DEVICE**

MIKROSPIEGELVORRICHTUNG UND OPTISCHE ABTASTVORRICHTUNG

DISPOSITIF À MICRO-MIROIRS ET DISPOSITIF DE BALAYAGE OPTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.03.2022 JP 2022048792**

(43) Date of publication of application:
**27.09.2023 Bulletin 2023/39**

(73) Proprietor: **FUJIFILM Corporation
Tokyo 106-8620 (JP)**

(72) Inventor: **AOSHIMA, Keisuke
Ashigarakami-gun
Kanagawa 258-8577 (JP)**

(74) Representative: **HGF
HGF Limited
1 City Walk
Leeds LS11 9DX (GB)**

(56) References cited:
**US-A1- 2023 035 607 US-B2- 11 143 863
US-B2- 8 817 351**

## Description

BACKGROUND OF THE INVENTION

1. Field of the Invention

The technique of the present disclosure relates to a micromirror device and an optical scanning device.

2. Description of the Related Art

A micromirror device (also referred to as a microscanner) is known as one of micro electro mechanical systems (MEMS) devices manufactured using the silicon (Si) nanofabrication technique. Since the micromirror device is small and has low power consumption, it is expected to have a wide range of applications in laser displays, laser projectors, optical coherence tomography, and the like.

There are various drive methods for the micromirror device, and a piezoelectric drive method using deformation of a piezoelectric body is promising since the generated torque is higher than that in other methods and a high scan angle can be obtained. In particular, in a case where a high scan angle is required, such as in a laser display, a higher scan angle can be obtained by resonantly driving the micromirror device of the piezoelectric drive method.

A general micromirror device used in a laser display comprises a mirror portion and a piezoelectric actuator (see, for example, JP2017-132281A). The mirror portion is swingable around a first axis and a second axis that are orthogonal to each other. The actuator allows the mirror portion to swing around the first axis and the second axis according to the driving voltage supplied from the outside.

In a biaxial micromirror device, it is essential to provide an angle sensor in order to detect an angle of a mirror portion around each axis in real time during biaxial driving. In particular, in a micromirror device using a piezoelectric actuator, it is preferable to use a piezoelectric sensor as the angle sensor. This is because, by using a piezoelectric sensor formed of the same piezoelectric element as the actuator, a manufacturing process of the micromirror device can be simplified and a size of the micromirror device can be decreased. The piezoelectric sensor converts stress generated by the swinging of the mirror portion into a voltage signal and outputs the signal. Documents US 8 817 351 B2, US 2023/035607 A1 and US 11 143 863 B2 are relevant to the present invention.

SUMMARY OF THE INVENTION

In the micromirror device in the related art, the piezoelectric sensor is disposed in the vicinity of a support portion (for example, a torsion bar) that supports the mirror portion, which is a portion where high stress is applied, or in the vicinity of an actuator. However, in a case where a piezoelectric mirror is disposed in such a portion, the voltage signal output from the piezoelectric sensor may include a large amount of noise components caused by interference from a surrounding wiring line, superimposition of a signal component around another axis other than a detection target, or the like. In a case where a large amount of noise components are included in this voltage signal, an accuracy of angle detection of the mirror portion deteriorates.

An object of the technology of the present disclosure is to provide a micromirror device and an optical scanning device capable of improving an accuracy of angle detection of a mirror portion.

In order to achieve the above-mentioned object, according to the present disclosure, there is provided a micromirror device comprising: a mirror portion having a reflecting surface for reflecting incident light; a pair of first support portions that are connected to the mirror portion on a first axis located in a plane including the reflecting surface of the mirror portion in a stationary state, and that swingably support the mirror portion around the first axis; a pair of movable frames that are connected to the first support portion and face each other across the first axis; a pair of second support portions that are connected to the movable frame on a second axis which is located in the plane and is orthogonal to the first axis, and that swingably support the mirror portion, the first support portion, and the movable frame around the second axis; a driving portion that surrounds the movable frame; a fixed frame that surrounds the driving portion; a pair of connecting portions that have a thinner thickness than the fixed frame and stretch along the first axis or the second axis to connect the driving portion and the fixed frame; and four piezoelectric sensors each of which is formed of an upper electrode, a piezoelectric film, and a lower electrode, in which a shape and a position of the upper electrode are in a line-symmetrical relationship about the first axis and the second axis, in which, in a case where a stretching direction of the connecting portion is a first direction, a direction orthogonal to the first direction and located in the plane is a second direction, and a length of a boundary between the fixed frame and the connecting portion in the second direction is denoted by H, at least a part of each of the four piezoelectric sensors is within a range of H/2 in the second direction from an axis parallel to the first direction, out of the first axis and the second axis, and is disposed on the fixed frame.

It is preferable that the four piezoelectric sensors are used to generate an angle detection signal of the mirror portion by adding or subtracting a voltage signal obtained from the upper electrode or the lower electrode of each of a pair of the piezoelectric sensors in the line-symmetrical relationship about the first axis or the second axis.

It is preferable that, in the four piezoelectric sensors, the upper electrodes or the lower electrodes of a pair of the piezoelectric sensors in the line-symmetrical relationship about the first axis or the second axis are connected via a metal wiring line.

It is preferable that the driving portion includes a pair of first actuators facing each other across the second axis and having a piezoelectric element, and a pair of second actuators surrounding the first actuator, facing each other across the first axis, and having a piezoelectric element.

It is preferable that the driving portion allows the mirror portion to swing around the first axis and the second axis by causing the second actuator to apply a rotational torque around the first axis to the mirror portion and causing the first actuator to apply a rotational torque around the second axis to the movable frame.

According to the present disclosure, there is provided an optical scanning device comprising: the micromirror device according to any one of the aspects described above; and a processor that drives the driving portion, in which the processor allows the mirror portion to swing around the first axis and the second axis by providing a driving signal to the driving portion, and an angle detection signal of the mirror portion is generated by adding or subtracting a voltage signal obtained from the upper electrode or the lower electrode of each of a pair of the piezoelectric sensors in the line-symmetrical relationship about the first axis or the second axis among the four piezoelectric sensors.

According to the technique of the present disclosure, it is possible to provide a micromirror device and an optical scanning device capable of improving an accuracy of angle detection of a mirror portion.

BRIEF DESCRIPTION OF THE DRAWINGS

Fig. 1 is a schematic view of an optical scanning device.
Fig. 2 is a block diagram showing an example of a hardware configuration of a driving controller.
Fig. 3 is an external perspective view of a micromirror device.
Fig. 4 is a plan view of the micromirror device as viewed from the light incident side.
Fig. 5 is a cross-sectional view taken along the line A-A of Fig. 4.
Fig. 6 is a cross-sectional view showing a state where a mirror portion rotates around a first axis.
Figs. 7A and 7B are diagrams showing examples of a first driving signal and a second driving signal.
Fig. 8 is a cross-sectional view schematically showing a configuration of a piezoelectric sensor.
Fig. 9 is a plan view showing an example of a planar shape of the piezoelectric sensor.
Fig. 10 is a partially enlarged view of a boundary between a fixed frame and a second connecting portion as viewed from a back surface side.
Fig. 11 is a diagram showing an example of a process of generating an angle detection signal.

Fig. 12 is a diagram showing parameters relating to dimensions of components of the micromirror device.
Fig. 13 is a diagram showing parameters relating to dimensions of components of the micromirror device.
Fig. 14 is a diagram showing specific set values of the parameters.
Fig. 15 is a plan view showing a configuration of a micromirror device according to a first comparative example.
Fig. 16 is a plan view showing a planar shape of a piezoelectric sensor according to the first comparative example.
Fig. 17 is a plan view showing a configuration of a micromirror device according to a second comparative example.
Fig. 18 is a plan view showing a planar shape of a piezoelectric sensor according to the second comparative example.
Fig. 19 is a plan view showing a planar shape of a piezoelectric sensor according to the second comparative example.
Fig. 20 is a diagram showing detection results of a first angle detection signal and a second angle detection signal.

DESCRIPTION OF THE PREFERRED EMBODIMENTS

An example of an embodiment relating to the technique of the present disclosure will be described with reference to the accompanying drawings.

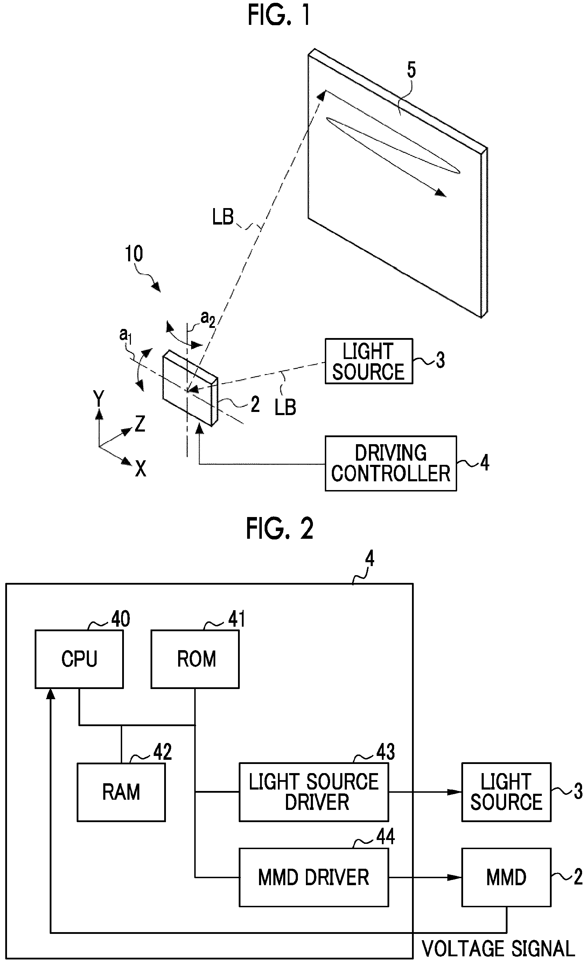

Fig. 1 schematically shows an optical scanning device 10 according to an embodiment. The optical scanning device 10 includes a micromirror device (hereinafter, referred to as micromirror device (MMD)) 2, a light source 3, and a driving controller 4. The optical scanning device 10 optically scans a surface to be scanned 5 by reflecting a light beam LB emitted from the light source 3 by the MMD 2 under the control of the driving controller 4. The surface to be scanned 5 is, for example, a screen.

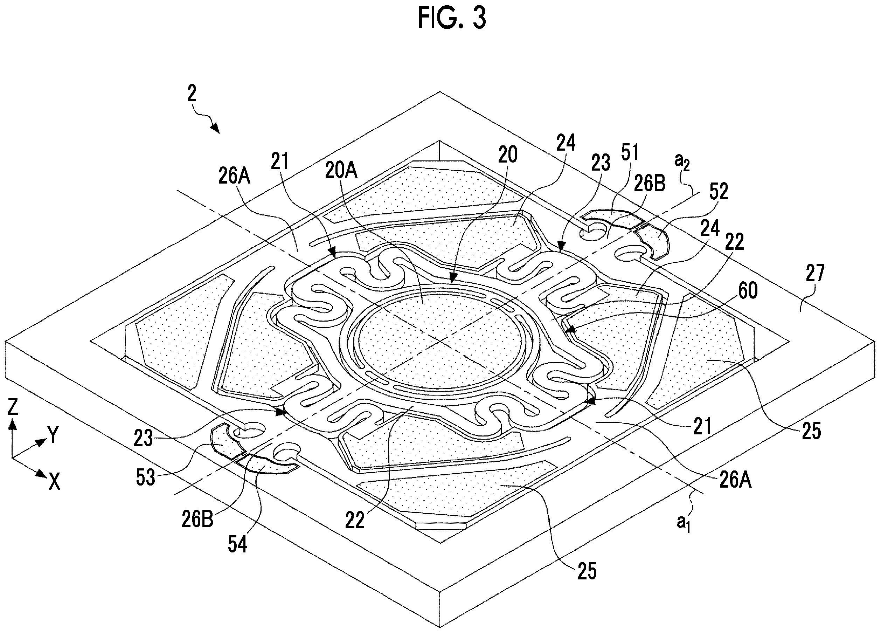

The MMD 2 is a piezoelectric biaxial drive type micromirror device capable of allowing a mirror portion 20 (see Fig. 3) to swing around a first axis $a_1$ and a second axis $a_2$ orthogonal to the first axis $a_1$. Hereinafter, the direction parallel to the first axis $a_1$ is referred to as an X direction, the direction parallel to the second axis $a_2$ is a Y direction, and the direction orthogonal to the first axis $a_1$ and the second axis $a_2$ is referred to as a Z direction.

The light source 3 is a laser device that emits, for example, laser light as the light beam LB. It is preferable that the light source 3 emits the light beam LB perpendicularly to a reflecting surface 20A (see Fig. 3) included in the mirror portion 20 in a state where the mirror portion 20 of the MMD 2 is stationary.

The driving controller 4 outputs a driving signal to the light source 3 and the MMD 2 based on optical scanning information. The light source 3 generates the light beam LB based on the input driving signal and emits the light beam LB to the MMD 2. The MMD 2 allows the mirror portion 20 to swing around the first axis $a_1$ and the second axis $a_2$ based on the input driving signal.

As will be described in detail below, the driving controller 4 allows the mirror portion 20 to resonate around the first axis $a_1$ and the second axis $a_2$, so that the surface to be scanned 5 is scanned with the light beam LB reflected by the mirror portion 20 such that a Lissajous waveform is drawn. This optical scanning method is called a Lissajous scanning method.

The optical scanning device 10 is applied to, for example, a Lissajous scanning type laser display. Specifically, the optical scanning device 10 can be applied to a laser scanning display such as augmented reality (AR) glass or virtual reality (VR) glass.

Fig. 2 shows an example of a hardware configuration of the driving controller 4. The driving controller 4 has a central processing unit (CPU) 40, a read only memory (ROM) 41, a random access memory (RAM) 42, a light source driver 43, and an MMD driver 44. The CPU 40 is an arithmetic unit that realizes the entire function of the driving controller 4 by reading out a program and data from a storage device such as the ROM 41 into the RAM 42 and executing processing. The CPU 40 is an example of a "processor" according to the technique of the present disclosure.

The ROM 41 is a non-volatile storage device and stores a program for the CPU 40 to execute processing and data such as the optical scanning information described above. The RAM 42 is a volatile storage device that temporarily holds a program and data.

The light source driver 43 is an electric circuit that outputs a driving signal to the light source 3 under the control of the CPU 40. In the light source driver 43, the driving signal is a driving voltage for controlling the irradiation timing and the irradiation intensity of the light source 3.

The MMD driver 44 is an electric circuit that outputs a driving signal to the MMD 2 under the control of the CPU 40. In the MMD driver 44, the driving signal is a driving voltage for controlling the timing, cycle, and deflection angle for allowing the mirror portion 20 of the MMD 2 to swing.

The CPU 40 controls the light source driver 43 and the MMD driver 44 based on the optical scanning information. The optical scanning information is information including the scanning pattern of the light beam LB with which the surface to be scanned 5 is scanned and the light emission timing of the light source 3.

In addition, the CPU 40 generates an angle detection signal representing an angle around the first axis $a_1$ and the second axis $a_2$ of the mirror portion 20 based on a voltage signal output from each of four piezoelectric sensors 51 to 54 described below, which are provided in the MMD 2. The CPU 40 corrects the driving signal based on the generated angle detection signal.

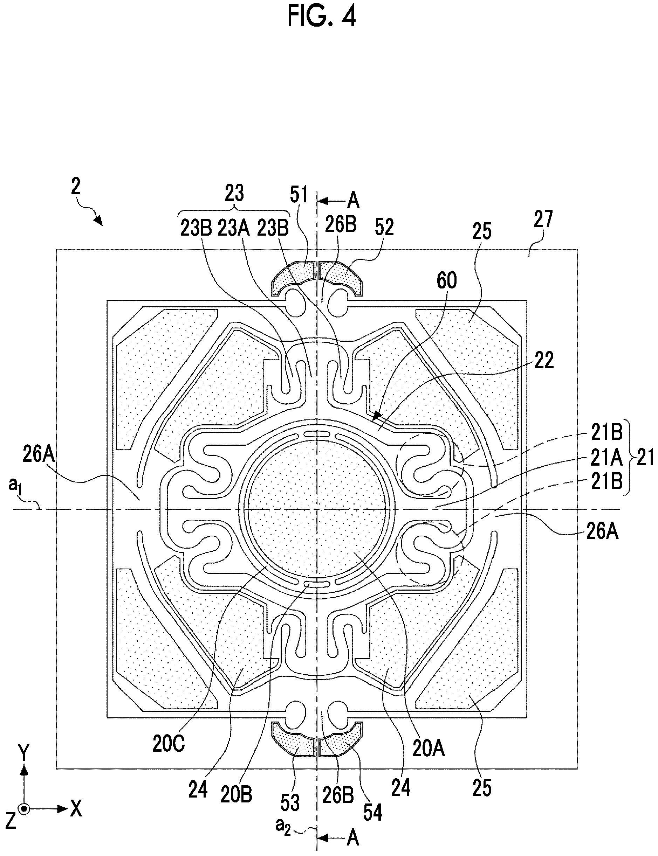

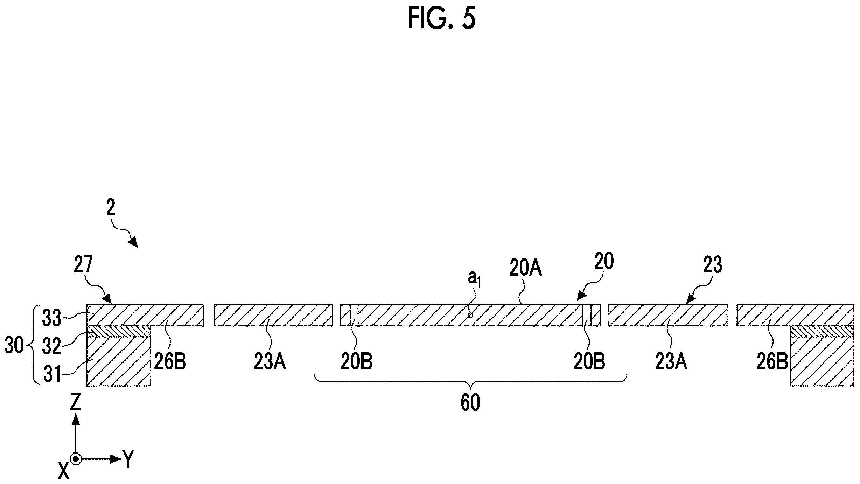

Next, the configuration of the MMD 2 according to a first embodiment will be described with reference to Figs. 3 to 5. Fig. 3 is an external perspective view of the MMD 2. Fig. 4 is a plan view of the MMD 2 as viewed from the light incident side. Fig. 5 is a cross-sectional view taken along the line A-A in Fig. 4.

As shown in Fig. 3, the MMD 2 has the mirror portion 20, a pair of first support portions 21, a pair of movable frames 22, a pair of second support portions 23, a pair of first actuators 24, a pair of second actuators 25, a pair of first connecting portions 26A, a pair of second connecting portions 26B, and a fixed frame 27. The MMD 2 is a so-called MEMS scanner.

The mirror portion 20 has a reflecting surface 20A for reflecting incident light. The reflecting surface 20A is provided on one surface of the mirror portion 20, and is formed of a metal thin film such as gold (Au) and aluminum (Al). The shape of the reflecting surface 20A is, for example, circular with the intersection of the first axis $a_1$ and the second axis $a_2$ as the center.

The first axis $a_1$ and the second axis $a_2$ exist, for example, in a plane including the reflecting surface 20A in a case where the mirror portion 20 is stationary. The planar shape of the MMD 2 is rectangular, line-symmetrical about the first axis $a_1$, and line-symmetrical about the second axis $a_2$.

The pair of first support portions 21 are disposed at positions facing each other across the second axis $a_2$, and have a shape that is line-symmetrical about the second axis $a_2$. In addition, each of the first support portions 21 has a shape that is line-symmetrical about the first axis $a_1$. The first support portions 21 are connected to the mirror portion 20 on the first axis $a_1$, and swingably support the mirror portion 20 around the first axis $a_1$.

The pair of movable frames 22 are disposed at positions facing each other across the first axis $a_1$, and have a shape that is line-symmetrical about the first axis $a_1$. Each of the movable frames 22 has a shape that is line-symmetrical about the second axis $a_2$. In addition, each of the movable frames 22 is curved along the outer periphery of the mirror portion 20. Both ends of the movable frame 22 are connected to the first support portion 21.

The first support portion 21 and the movable frame 22 are connected to each other to surround the mirror portion 20. The mirror portion 20, the first support portion 21, and the movable frame 22 constitute a movable portion 60.

The pair of second support portions 23 are disposed at positions facing each other across the first axis $a_1$, and have a shape that is line-symmetrical about the first axis $a_1$. Each of the second support portions 23 has a shape that is line-symmetrical about the second axis $a_2$. The second support portion 23 is connected to the movable frame 22 on the second axis $a_2$, and swingably supports the movable portion 60 having the mirror portion 20 around the second axis $a_2$. In addition, both ends of the second support portion 23 are connected to the first actuator 24.

The pair of first actuators 24 are disposed at positions facing each other across the second axis $a_2$, and have a shape that is line-symmetrical about the second axis $a_2$. In addition, the first actuators 24 have a shape that is line-symmetrical about the first axis $a_1$. The first actuator 24 is formed along the outer periphery of the movable frame 22 and the first support portion 21. The first actuator 24 is a piezoelectric drive type actuator comprising a piezoelectric element.

In Figs. 3 and 4, although it seems that the first actuator 24 is divided in the vicinity of the first axis $a_1$, the first actuator 24 is electrically connected by a wiring line (not shown) across the first axis $a_1$.

The second support portion 23 and the first actuator 24 are connected to each other to surround the movable portion 60.

The pair of second actuators 25 are disposed at positions facing each other across the first axis $a_1$, and have a shape that is line-symmetrical about the first axis $a_1$. In addition, the second actuators 25 have a shape that is line-symmetrical about the second axis $a_2$. The second actuator 25 is formed along the outer periphery of the first actuator 24 and the second support portion 23. The second actuator 25 is a piezoelectric drive type actuator comprising a piezoelectric element.

In Figs. 3 and 4, although it seems that the second actuator 25 is divided in the vicinity of the second axis $a_2$, the second actuator 25 is electrically connected by a wiring line (not shown) across the second axis $a_2$.

The pair of first connecting portions 26A are disposed at positions facing each other across the second axis $a_2$, and have a shape that is line-symmetrical about the second axis $a_2$. In addition, each of the first connecting portions 26A has a shape that is line-symmetrical about the first axis $a_1$. The first connecting portion 26A is disposed along the first axis $a_1$, and connects the first actuator 24 and the second actuator 25 on the first axis $a_1$.

The pair of second connecting portions 26B are disposed at positions facing each other across the first axis $a_1$, and have a shape that is line-symmetrical about the first axis $a_1$. In addition, each of the second connecting portions 26B is stretched in the Y direction, and has a shape that is line-symmetrical about the second axis $a_2$. The second connecting portion 26B is disposed along the second axis $a_2$, and connects the second actuator 25 and the fixed frame 27 on the second axis $a_2$. In the present embodiment, the Y direction corresponds to the "stretching direction" according to the technique of the present disclosure.

The second actuator 25 and the second connecting portion 26B are connected to each other to surround the movable portion 60 and the first actuator 24. The first actuator 24 and the second actuator 25 constitute a driving portion surrounding the movable frame 22.

The fixed frame 27 is a frame-shaped member having a rectangular outer shape, and has a shape that is line-symmetrical about each of the first axis $a_1$ and the second axis $a_2$. The fixed frame 27 surrounds the outer periphery of the second actuator 25 and the second connecting portion 26B. That is, the fixed frame 27 surrounds the driving portion.

The first actuator 24 and the second actuator 25 are piezoelectric actuators each including a piezoelectric element. The pair of first actuators 24 allow the movable portion 60 to swing around the second axis $a_2$ by applying rotational torque around the second axis $a_2$ to the mirror portion 20 and the movable frame 22. The pair of second actuators 25 allow the mirror portion 20 to swing around the first axis $a_1$ by applying rotational torque around the first axis $a_1$ to the mirror portion 20, the movable frame 22, and the first actuator 24.

As shown in Fig. 4, the first support portion 21 is composed of a swing shaft 21A and a pair of coupling portions 21B. The swing shaft 21A is a so-called torsion bar stretched along the first axis $a_1$. One end of the swing shaft 21A is connected to the mirror portion 20, and the other end thereof is connected to the coupling portion 21B.

The pair of coupling portions 21B are disposed at positions facing each other across the first axis $a_1$, and have a shape that is line-symmetrical about the first axis $a_1$. One end of the coupling portion 21B is connected to the swing shaft 21A, and the other end thereof is connected to the movable frame 22. The coupling portion 21B has a folded structure. Since the coupling portion 21B has elasticity due to the folded structure, the internal stress applied to the swing shaft 21A is relaxed in a case where the mirror portion 20 swings around the first axis ai.

The second support portion 23 is composed of a swing shaft 23A and a pair of coupling portions 23B. The swing shaft 23A is a so-called torsion bar stretched along the second axis $a_2$. One end of the swing shaft 23A is connected to the movable frame 22, and the other end thereof is connected to the coupling portion 23B.

The pair of coupling portions 23B are disposed at positions facing each other across the second axis $a_2$, and have a shape that is line-symmetrical about the second axis $a_2$. One end of the coupling portion 23B is connected to the swing shaft 23A, and the other end thereof is connected to the first actuator 24. The coupling portion 23B has a folded structure. Since the coupling portion 23B has elasticity due to the folded structure, the internal stress applied to the swing shaft 23A is relaxed in a case where the mirror portion 20 swings around the second axis $a_2$.

In the mirror portion 20, a plurality of slits 20B and 20C are formed on the outside of the reflecting surface 20A along the outer periphery of the reflecting surface 20A. The plurality of slits 20B and 20C are disposed at positions that are line-symmetrical about the first axis $a_1$ and the second axis $a_2$, respectively. The slit 20B has an effect of suppressing distortion generated on the reflecting surface 20A due to the swing of the mirror portion 20.

Four piezoelectric sensors 51 to 54 are provided in the vicinity of the pair of second connecting portions 26B as an angle sensor for detecting an angle of the mirror portion 20. The piezoelectric sensors 51 to 54, similarly to the first actuator 24 and the second actuator 25, are formed of a piezoelectric element. The piezoelectric sensors 51 to 54 are in a line-symmetrical relationship about the first axis $a_1$ and the second axis $a_2$. Specifically, the piezoelectric sensors 51 and 52 are disposed in the vicinity of one of the pair of second connecting portions 26B, and have a line-symmetrical relationship in position and shape about the second axis $a_2$. The piezoelectric sensors 53 and 54 are disposed in the vicinity of the other of the pair of second connecting portions 26B, and have a line-symmetrical relationship in position and shape about the second axis $a_2$. The piezoelectric sensors 51 and 52 and the piezoelectric sensors 53 and 54 have a line-symmetrical relationship in position and shape about the first axis $a_1$.

In Figs. 3 and 4, the wiring line and the electrode pad for giving the driving signal to the first actuator 24 and the second actuator 25 are not shown. In addition, the wiring line and electrode pad for acquiring the voltage signals output from the piezoelectric sensors 51 to 54 are not shown. A plurality of these electrode pads are provided on the fixed frame 27.

As shown in Fig. 5, the MMD 2 is formed, for example, by performing an etching treatment on a silicon on insulator (SOI) substrate 30. The SOI substrate 30 is a substrate in which a silicon oxide layer 32 is provided on a first silicon active layer 31 made of single crystal silicon, and a second silicon active layer 33 made of single crystal silicon is provided on the silicon oxide layer 32.

The mirror portion 20, the first support portion 21, the movable frame 22, the second support portion 23, the first actuator 24, the second actuator 25, the first connecting portion 26A, and the second connecting portion 26B are formed of the second silicon active layer 33 remaining by removing the first silicon active layer 31 and the silicon oxide layer 32 from the SOI substrate 30 by an etching treatment. The second silicon active layer 33 functions as an elastic portion having elasticity. The fixed frame 27 is formed of three layers of the first silicon active layer 31, the silicon oxide layer 32, and the second silicon active layer 33. That is, the mirror portion 20, the first support portion 21, the movable frame 22, the second support portion 23, the first actuator 24, the second actuator 25, the first connecting portion 26A, and the second connecting portion 26B have a thinner thickness than the fixed frame 27. In the present disclosure, the thickness means a width in the Z direction.

The first actuator 24 includes a piezoelectric element (not shown) formed on the second silicon active layer 33. The piezoelectric element has a laminated structure in which a lower electrode, a piezoelectric film, and an upper electrode are sequentially laminated on the second silicon active layer 33. The second actuator 25 has the same configuration as the first actuator 24.

The lower electrode and the upper electrode are formed of, for example, metal such as gold (Au) or platinum (Pt). The piezoelectric film is formed of, for example, lead zirconate titanate (PZT), which is a piezoelectric material. The lower electrode and the upper electrode are electrically connected to the driving controller 4 described above via the wiring line and the electrode pad.

The lower electrode is connected to the driving controller 4 via the wiring line and the electrode pad, and a ground potential is applied thereto. A driving voltage is applied to the upper electrode from the driving controller 4.

In a case where a positive or negative voltage is applied to the piezoelectric film in the polarization direction, deformation (for example, expansion and contraction) proportional to the applied voltage occurs. That is, the piezoelectric film exerts a so-called inverse piezoelectric effect. The piezoelectric film exerts an inverse piezoelectric effect by applying a driving voltage from the driving controller 4 to the upper electrode, and displaces the first actuator 24 and the second actuator 25.

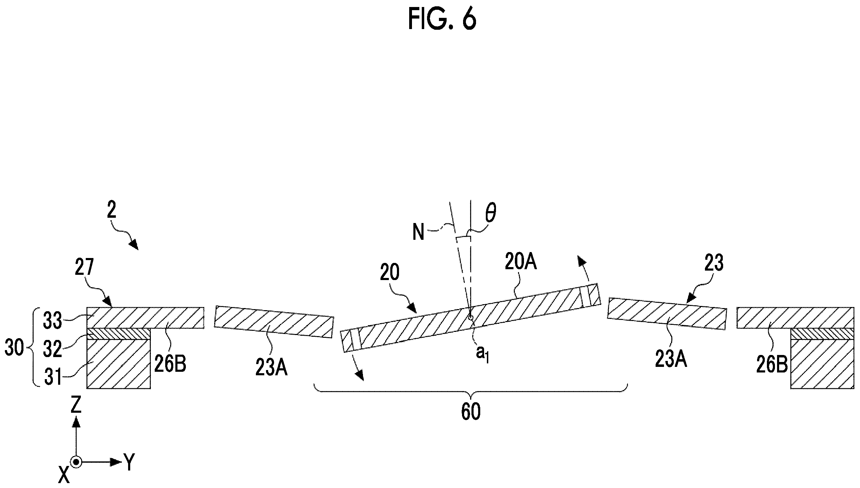

Fig. 6 shows an example in which one piezoelectric film of the pair of second actuators 25 is extended and the other piezoelectric film is contracted, thereby generating rotational torque around the first axis $a_1$ in the second actuator 25. In this way, one of the pair of second actuators 25 and the other are displaced in opposite directions to each other, whereby the mirror portion 20 rotates around the first axis $a_1$.

In addition, Fig. 6 shows an example in which the second actuator 25 is driven in an anti-phase resonance mode (hereinafter, referred to as an anti-phase rotation mode) in which the displacement direction of the pair of second actuators 25 and the rotation direction of the mirror portion 20 are opposite to each other. On the other hand, an in-phase resonance mode in which the displacement direction of the pair of second actuators 25 and the rotation direction of the mirror portion 20 are the same direction is called an in-phase rotation mode. In the present embodiment, the second actuator 25 is driven in the anti-phase rotation mode.

A deflection angle $\theta$ of the mirror portion 20 around the first axis $a_1$ is controlled by the driving signal (hereinafter, referred to as a first driving signal) given to the second actuator 25 by the driving controller 4. The first driving signal is, for example, a sinusoidal AC voltage. The first driving signal includes a driving voltage waveform $V_{1A}(t)$ applied to one of the pair of second actuators 25 and a driving voltage waveform $V_{1B}(t)$ applied to the other. The driving voltage waveform $V_{1A}(t)$ and the driving voltage waveform $V_{1B}(t)$ are in an anti-phase with each other (that is, the phase difference is 180°).

The deflection angle $\theta$ of the mirror portion 20 around the first axis $a_1$ corresponds to an angle at which the normal line N of the reflecting surface 20A is inclined with respect to the Z direction in the YZ plane. Hereinafter, the deflection angle $\theta$ is also referred to as a rotation angle $\theta$.

The first actuator 24 is driven in an anti-phase resonance mode in the same manner as the second actuator 25. A deflection angle of the mirror portion 20 around the second axis $a_2$ is controlled by the driving signal (hereinafter, referred to as a second driving signal) given to the first actuator 24 by the driving controller 4. The second driving signal is, for example, a sinusoidal AC voltage. The second driving signal includes a driving voltage waveform $V_{2A}$ (t) applied to one of the pair of first actuators 24 and a driving voltage waveform $V_{2B}$ (t) applied to the other. The driving voltage waveform $V_{2A}$ (t) and the driving voltage waveform $V_{2B}$ (t) are in an anti-phase with each other (that is, the phase difference is 180°).

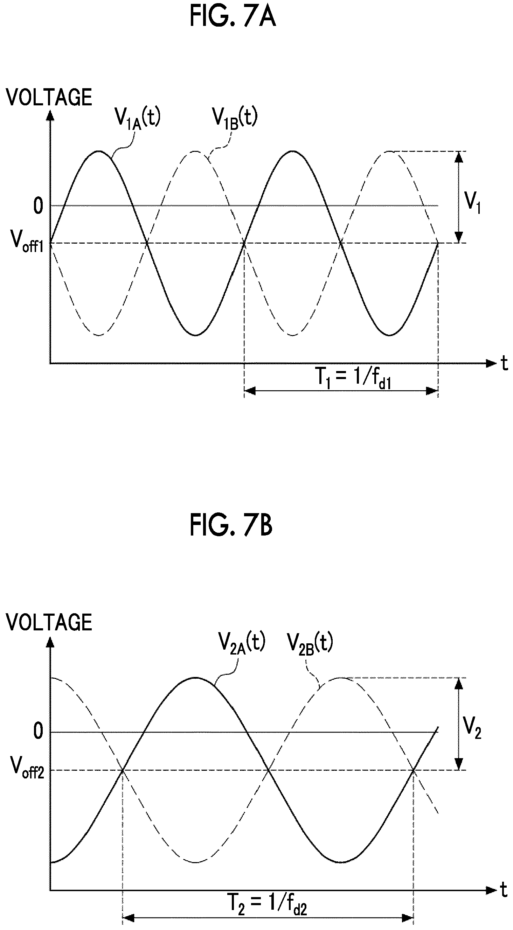

Figs. 7A and 7B show examples of the first driving signal and the second driving signal. Fig. 7A shows the driving voltage waveforms $V_{1A}$ (t) and $V_{1B}$ (t) included in the first driving signal. Fig. 7B shows the driving voltage waveforms $V_{2A}$ (t) and $V_{2B}$ (t) included in the second driving signal.

The driving voltage waveforms $V_{1A}$ (t) and $V_{1B}$ (t) are represented as follows, respectively.

$$V_{1A}(t) = V_{off1} + V_1 \sin(2\pi f_{d1} t)$$

$$V_{1B}(t) = V_{off1} + V_1 \sin(2\pi f_{d1} t + \alpha)$$

Here, $V_1$ is the amplitude voltage. $V_{off1}$ is the bias voltage. $f_{d1}$ is the driving frequency (hereinafter, referred to as the first driving frequency). t is time. $\alpha$ is the phase difference between the driving voltage waveforms $V_{1A}$ (t) and $V_{1B}$ (t). In the present embodiment, for example, $\alpha = 180°$.

By applying the driving voltage waveforms $V_{1A}$ (t) and $V_{1B}$ (t) to the pair of second actuators 25, the mirror portion 20 swings around the first axis $a_1$ at the first driving frequency $f_{d1}$.

The driving voltage waveforms $V_{2A}$ (t) and $V_{2B}$ (t) are represented as follows, respectively.

$$V_{2A}(t) = V_{off2} + V_2 \sin(2\pi f_{d2} t + \varphi)$$

$$V_{2B}(t) = V_{off2} + V_2 \sin(2\pi f_{d2} t + \beta + \varphi)$$

Here, $V_2$ is the amplitude voltage. $V_{off2}$ is the bias voltage. $f_{d2}$ is the driving frequency (hereinafter, referred to as the second driving frequency). t is time. $\beta$ is the phase difference between the driving voltage waveforms $V_{2A}$ (t) and $V_{2B}$ (t). In the present embodiment, for example, $\beta = 180°$. In addition, $\varphi$ is the phase difference between the driving voltage waveforms $V_{1A}$ (t) and $V_{1B}$ (t) and the driving voltage waveforms $V_{2A}$ (t) and $V_{2B}$ (t). In the present embodiment, for example, $V_{off1} = V_{off2} = 0$ V.

By applying the driving voltage waveforms $V_{2A}$

(t) and $V_{2B}$ (t) to the pair of first actuators 24, the movable portion 60 including the mirror portion 20 swings around the second axis $a_2$ at the second driving frequency $f_{d2}$.

The first driving frequency fai is set so as to match the resonance frequency around the first axis $a_1$ of the mirror portion 20. The second driving frequency $f_{d2}$ is set so as to match the resonance frequency around the second axis $a_2$ of the mirror portion 20. In the present embodiment, the first driving frequency fai is larger than the second driving frequency $f_{d2}$.

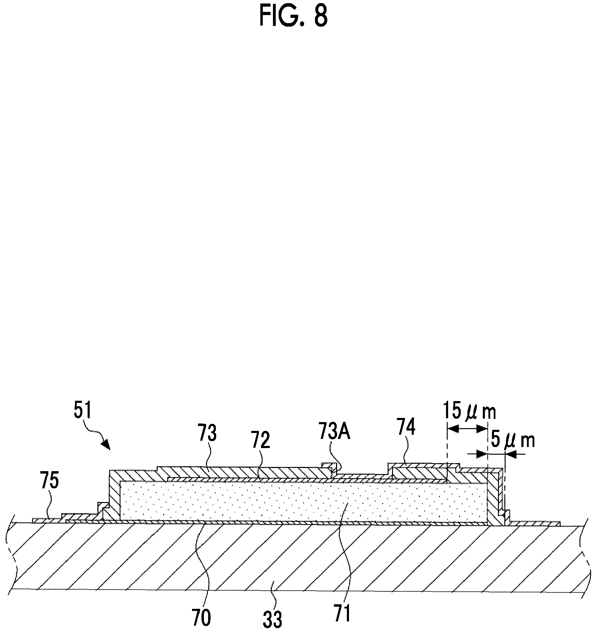

Fig. 8 schematically shows a configuration of the piezoelectric sensor 51. The piezoelectric sensor 51 includes a lower electrode 70, a piezoelectric film 71, and an upper electrode 72. The lower electrode 70, the piezoelectric film 71, and the upper electrode 72 are sequentially laminated on the second silicon active layer 33. The lower electrode 70 and the upper electrode 72 are formed of, for example, a metal such as gold (Au) or platinum (Pt). The piezoelectric film 71 is formed of, for example, lead zirconate titanate (PZT), which is a piezoelectric material.

The upper electrode 72 is covered with an insulating film 73. The insulating film 73 is formed with an opening 73A through which a part of the upper electrode 72 is exposed. An electrode wiring line 74 made of metal is provided on the insulating film 73. The electrode wiring line 74 is connected to the upper electrode 72 via the opening 73A. The lower electrode 70 is connected to an electrode wiring line 75 formed on the second silicon active layer 33. A ground potential is applied to the electrode wiring line 75.

The lower electrode 70 has a thickness of, for example, 150 nm. The upper electrode 72 has a thickness of, for example, 200 nm. The piezoelectric film 71 has a thickness of, for example, 2 $\mu$m. The insulating film 73 has a thickness of, for example, 600 nm. The electrode wiring lines 74 and 75 each have a thickness of 400 nm, for example.

The lower electrode 70, the piezoelectric film 71, and the upper electrode 72 are manufactured by the same manufacturing process as lower electrodes, piezoelectric films, and upper electrodes of the first actuator 24 and the second actuator 25.

The piezoelectric film 71 converts the stress applied in a case where the mirror portion 20 swings into a voltage signal by a piezoelectric effect. As a result, a voltage signal corresponding to the angle of the mirror portion 20 is acquired from the upper electrode 72.

The piezoelectric sensors 52 to 54 have the same configuration as the piezoelectric sensor 51.

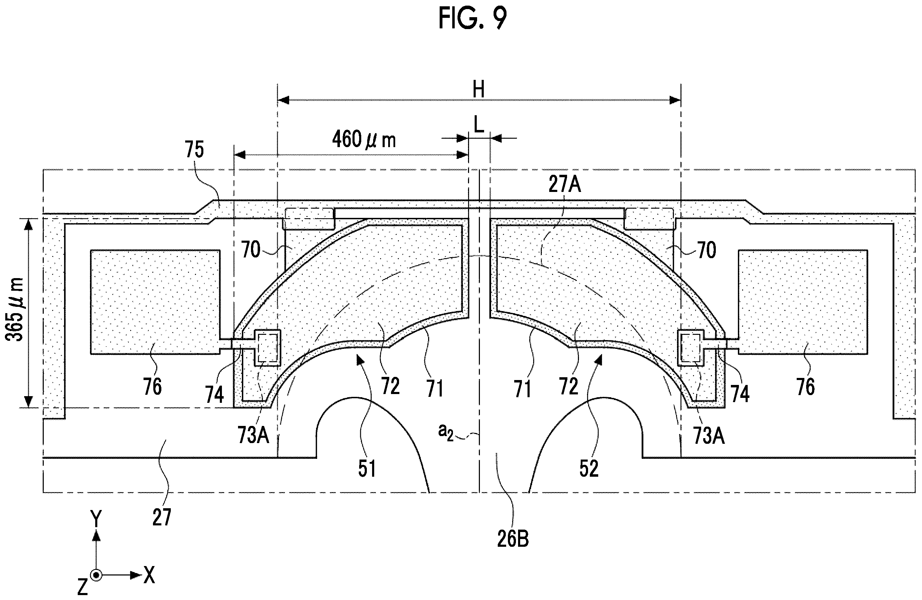

Fig. 9 shows an example of the planar shape of the piezoelectric sensors 51 and 52. In Fig. 9, the wiring line or the like for giving the driving signal to the insulating film 73, the first actuator 24 and the second actuator 25 are not shown.

The positions and shapes of the lower electrode 70, the piezoelectric film 71, and the upper electrode 72 are in a line-symmetrical relationship about the second

axis $a_2$. In a case where a length of a boundary 27A between the fixed frame 27 and the second connecting portion 26B in the X direction is denoted by H, at least a part of each of the piezoelectric sensors 51 and 52 is within a range of H/2 in the X direction from the second axis $a_2$. In addition, each of the piezoelectric sensors 51 and 52 is disposed across the boundary 27A. That is, at least a part of each of the piezoelectric sensors 51 and 52 is disposed on the fixed frame 27.

The electrode wiring line 74 connected to the upper electrode 72 of the piezoelectric sensor 51 and the electrode wiring line 74 connected to the upper electrode 72 of the piezoelectric sensor 52 are connected to an electrode pad 76. The lower electrode 70 of the piezoelectric sensor 51 and the lower electrode 70 of the piezoelectric sensor 52 are connected via the electrode wiring line 75. The electrode wiring line 75 is connected to an electrode pad (not shown) for applying a ground potential. The voltage signals obtained from the upper electrodes 72 of the piezoelectric sensors 51 and 52 are output to the outside of the MMD 2 via the electrode wiring line 74 and the electrode pad 76. The electrode pad 76 is disposed on the fixed frame 27.

The piezoelectric sensors 51 and 52 do not exist on the second axis $a_2$ and are separated from each other. An interval L between the piezoelectric film 71 of the piezoelectric sensor 51 and the piezoelectric film 71 of the piezoelectric sensor 52 in the X direction is, for example, 30 $\mu$m.

The piezoelectric sensors 53 and 54 have the same configuration as the piezoelectric sensors 51 and 52 except that the positions and shapes thereof are line-symmetrical with the positions and shapes of the piezoelectric sensors 51 and 52 about the first axis $a_1$.

In the present embodiment, the Y direction corresponds to the "first direction" according to the technique of the present disclosure, and the X direction corresponds to the "second direction" according to the technique of the present disclosure. The electrode wiring line 75 corresponds to the "metal wiring line" according to the technique of the present disclosure.

As described above, since at least a part of each of the piezoelectric sensors 51 to 54 is disposed on the fixed frame 27, a length of the electrode wiring line 74 connecting the upper electrode 72 and the electrode pad 76 is shortened. As a result, interference from a wiring line (such as a wiring line for giving a driving signal to the first actuator 24 and the second actuator 25) (not shown) disposed in the fixed frame 27 and the second connecting portion 26B is suppressed.

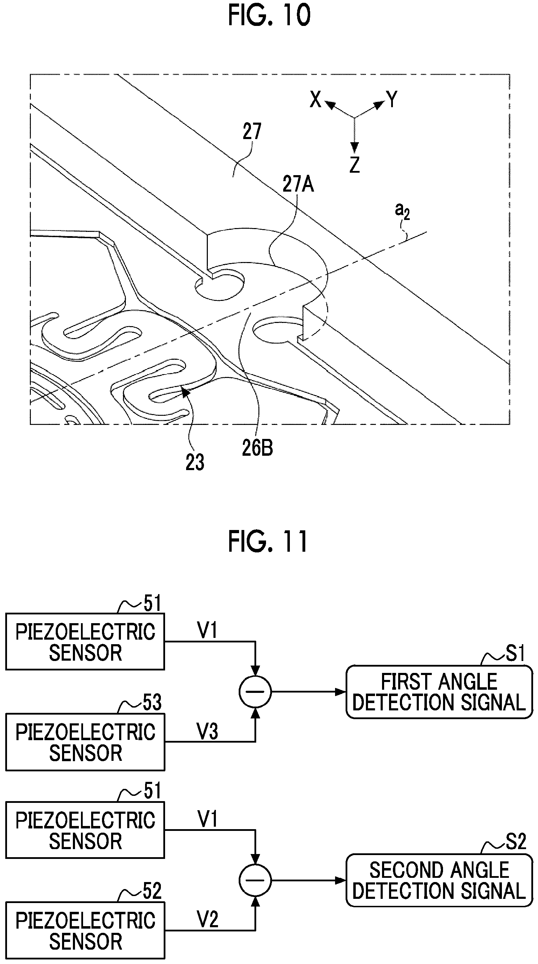

Fig. 10 is a partially enlarged view of the boundary 27A between the fixed frame 27 and the second connecting portion 26B as viewed from a back surface side. Since the fixed frame 27 and the second connecting portion 26B have different thicknesses, the boundary 27A is formed at a stepped portion between the fixed frame 27 and the second connecting portion 26B. In the present embodiment, the boundary 27A has a semi-circular shape.

Fig. 11 shows an example of a process of generating the angle detection signal by the CPU 40. For example, the CPU 40 generates a first angle detection signal S1 representing an angle of the mirror portion 20 around the first axis $a_1$ by subtracting a voltage signal V3 obtained from the upper electrode 72 of the piezoelectric sensor 53 from a voltage signal V1 obtained from the upper electrode 72 of the piezoelectric sensor 51. In addition, the CPU 40 generates a second angle detection signal S2 representing an angle of the mirror portion 20 around the second axis $a_2$ by subtracting a voltage signal V2 obtained from the upper electrode 72 of the piezoelectric sensor 52 from the voltage signal V1 obtained from the upper electrode 72 of the piezoelectric sensor 51.

Signal components (detection target components) around the first axis $a_1$ included in the voltage signal V1 and the voltage signal V3 are in an anti-phase with each other. On the other hand, signal components (noise components) around the second axis $a_2$ included in the voltage signal V1 and the voltage signal V3 are in-phase with each other. Therefore, by subtracting the voltage signal V3 from the voltage signal V1, the detection target component is amplified, and the noise component, which is a signal component around the other axis other than the detection target, is reduced.

Signal components (detection target components) around the second axis $a_2$ included in the voltage signal V1 and the voltage signal V2 are in an anti-phase with each other. On the other hand, signal components (noise components) around the first axis $a_1$ included in the voltage signal V1 and the voltage signal V2 are in-phase with each other. Therefore, by subtracting the voltage signal V2 from the voltage signal V1, the detection target component is amplified, and the noise component, which is a signal component around the other axis other than the detection target, is reduced.

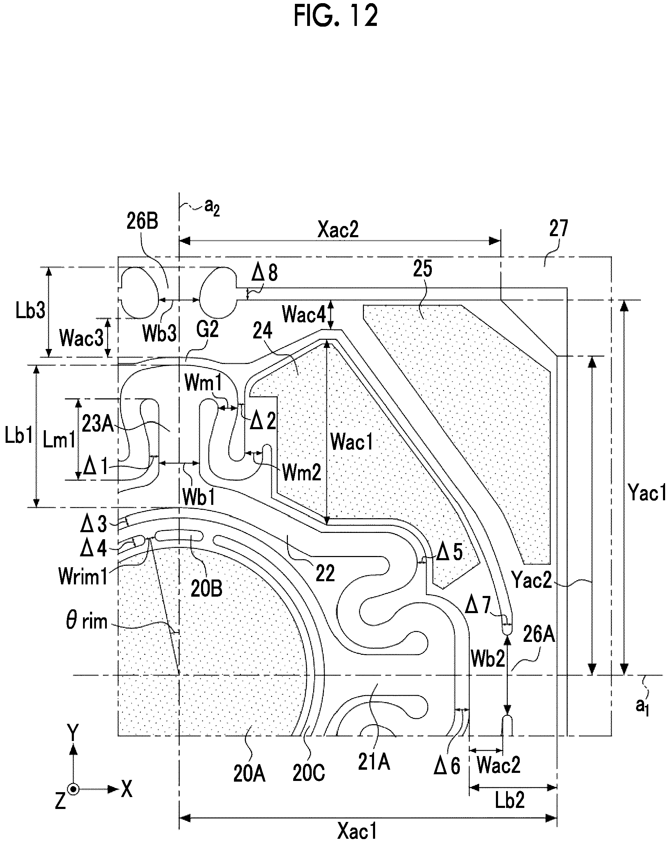

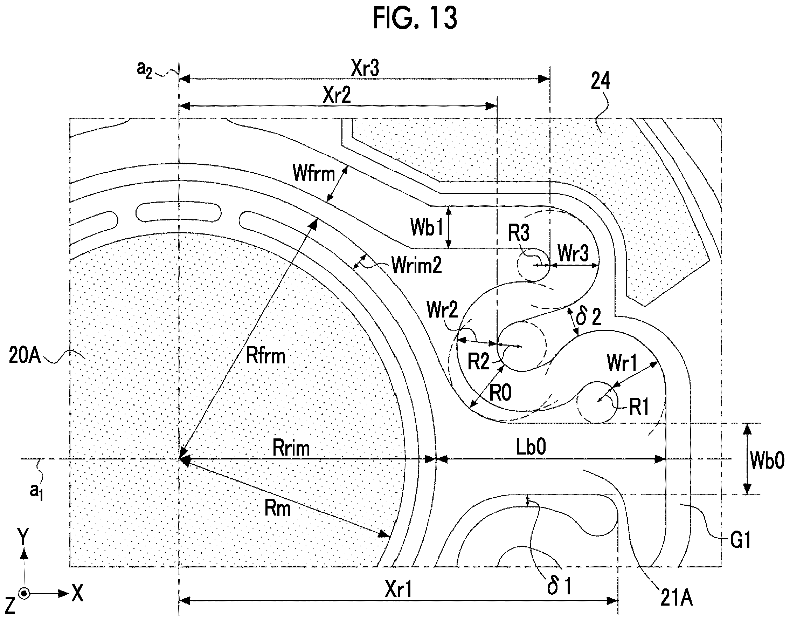

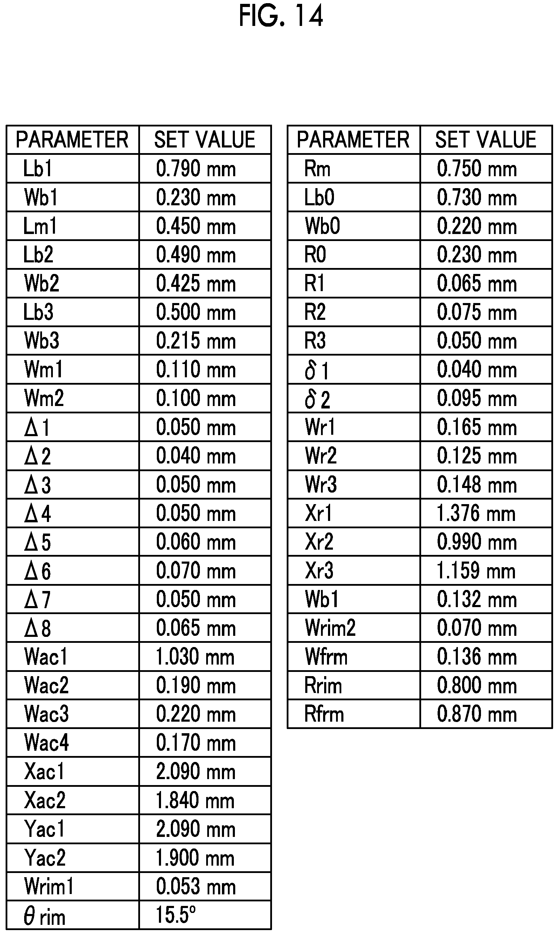

By configuring the MMD 2 as described above, an accuracy of angle detection of the mirror portion 20 is improved. In order to verify this effect, the present applicant prepared a sample and performed an experiment. Figs. 12 and 13 show parameters relating to the width, length, and the like of the components of the sample used in the experiment. Fig. 14 is a diagram showing specific set values of the parameters.

The diameter of the mirror portion 20 was 1.5 mm, the thickness of the SOI substrate 30 was 430 $\mu$m, the thickness of the second silicon active layer 33 was 60 $\mu$m, and the thickness of the silicon oxide layer 32 was 40 $\mu$m. The length of one side of the fixed frame 27 was 5.2 mm.

In addition, the present applicant prepared a plurality of samples having different ratios L/H by setting the length H of the boundary 27A shown in Fig. 9 to 770 $\mu$m and varying the interval L.

First Comparative Example

As a first comparative example, the present applicant prepared a sample for an MMD 2A in which the position of the piezoelectric sensor is different from that of the MMD 2 according to the above embodiment.

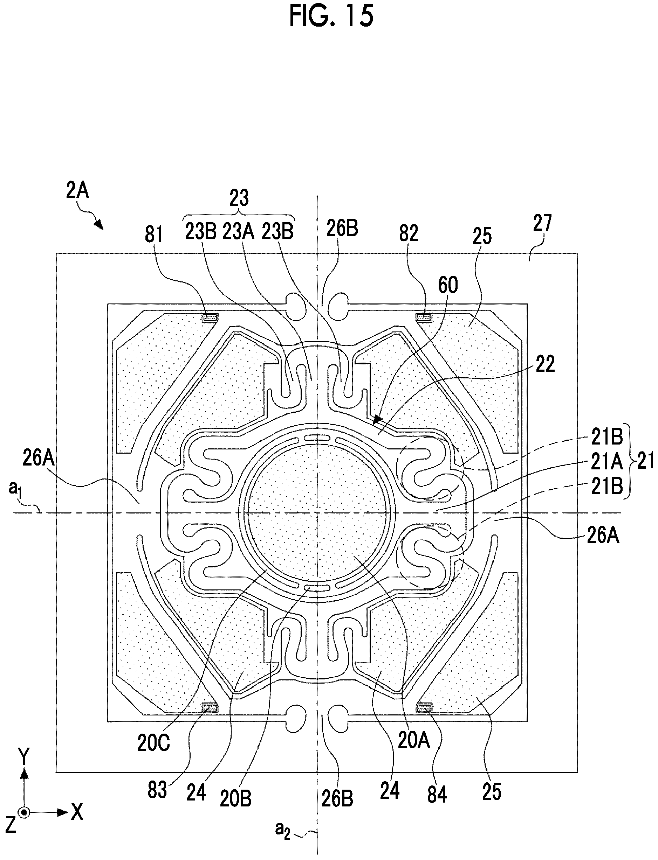

Fig. 15 shows the configuration of the MMD 2A according to the first comparative example. In Fig. 15, the components having the same functions as those of the MMD 2 according to the above embodiment are designated by the same reference numerals.

In the MMD 2A according to the first comparative example, piezoelectric sensors 81 to 84 are provided instead of the piezoelectric sensors 51 to 54. The piezoelectric sensors 81 to 84 are disposed in the vicinity of the second actuator 25. Four piezoelectric sensors 81 and 84 have a line-symmetrical relationship in position and shape about the first axis $a_1$ and the second axis $a_2$.

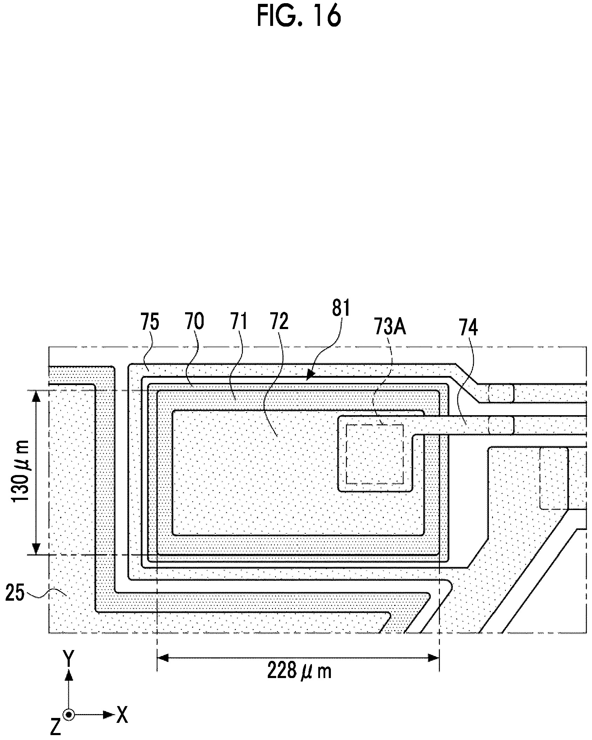

Fig. 16 shows the planar shape of the piezoelectric sensor 81. The piezoelectric sensor 81 is formed of the lower electrode 70, the piezoelectric film 71, and the upper electrode 72, as with the piezoelectric sensor 51 of the above-described embodiment. The lower electrode 70 is connected to the electrode wiring line 75 to which a ground potential is applied. The upper electrode 72 is connected to an electrode pad provided on the fixed frame 27 via the electrode wiring line 74. The piezoelectric sensors 82 to 84 have the same configuration as the piezoelectric sensor 81.

The width, length, and the like of other components of the MMD 2A are the same as those of the MMD 2 according to the above-described embodiment.

Also in the present comparative example, the voltage signals V1 to V4 are output from the piezoelectric sensors 81 to 84, respectively. The CPU 40 generates the first angle detection signal S1 by subtracting the voltage signal V3 from the voltage signal V1, and generates the second angle detection signal S2 by subtracting the voltage signal V2 from the voltage signal V1.

Second Comparative Example

As a second comparative example, the present applicant prepared a sample for an MMD 2B in which the position of the piezoelectric sensor is different from that of the MMD 2 according to the above embodiment.

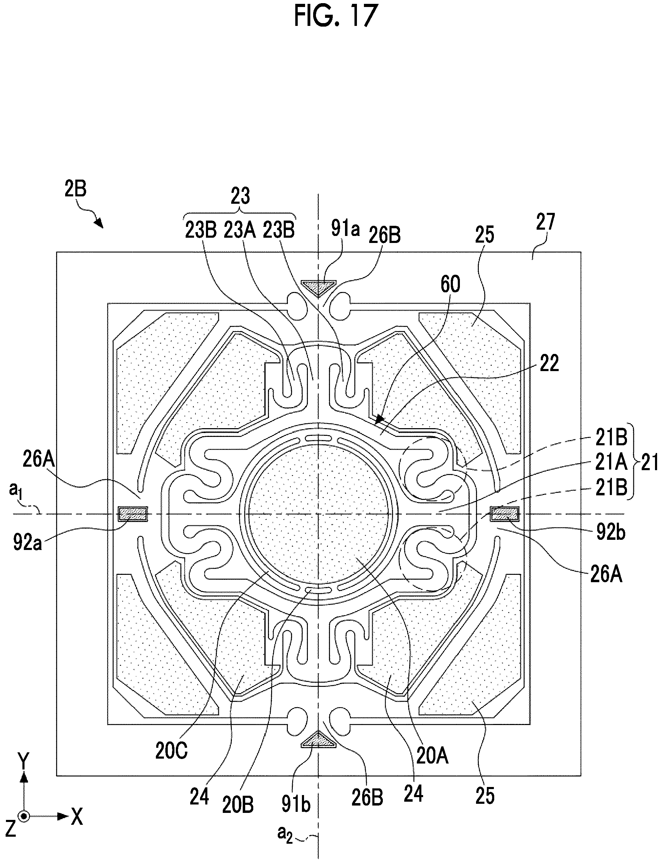

Fig. 17 shows the configuration of the MMD 2B according to the second comparative example. In Fig. 17, the components having the same functions as those of the MMD 2 according to the above embodiment are designated by the same reference numerals.

In the MMD 2B according to the second comparative example, piezoelectric sensors 91a, 91b, 92a, and 92b are provided instead of the piezoelectric sensors 51 to 54. The piezoelectric sensors 91a and 91b are disposed on the fixed frame 27 and on the second axis $a_2$. The piezoelectric sensors 91a and 91b have a line-symmetrical relationship about the first axis $a_1$. The piezoe-

lectric sensors 92a and 92b are disposed on the fixed frame 27 and on the first axis $a_1$. The piezoelectric sensors 92a and 92b have a line-symmetrical relationship about the second axis $a_2$.

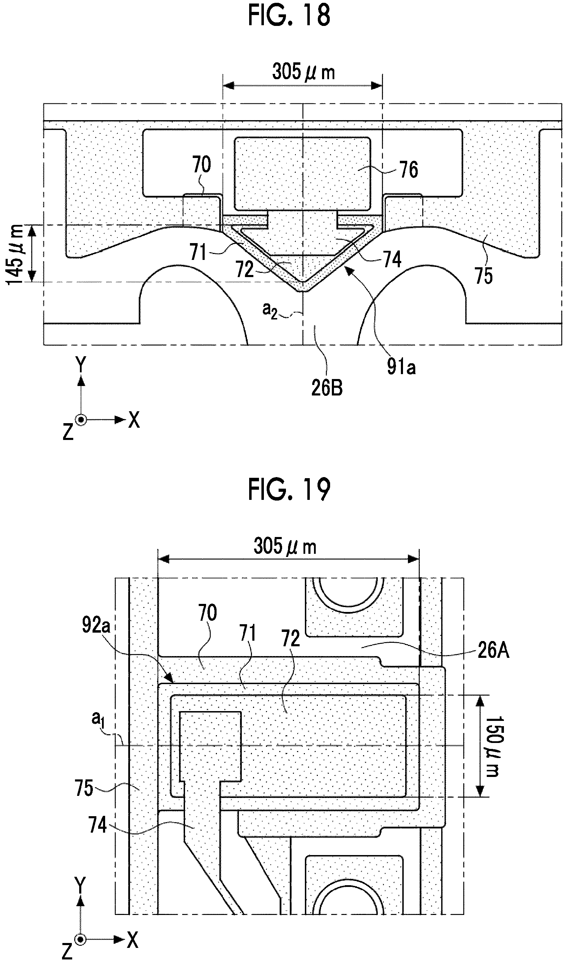

Fig. 18 shows the planar shape of the piezoelectric sensor 91a. The piezoelectric sensor 91a is formed of the lower electrode 70, the piezoelectric film 71, and the upper electrode 72, as with the piezoelectric sensor 51 of the above-described embodiment. The lower electrode 70 is connected to the electrode wiring line 75 to which a ground potential is applied. The upper electrode 72 is connected to the electrode pad 76 via the electrode wiring line 74. The piezoelectric sensor 91b has the same configuration as the piezoelectric sensor 91a.

Fig. 19 shows the planar shape of the piezoelectric sensor 92a. The piezoelectric sensor 92a is formed of the lower electrode 70, the piezoelectric film 71, and the upper electrode 72, as with the piezoelectric sensor 51 of the above-described embodiment. The lower electrode 70 is connected to the electrode wiring line 75 to which a ground potential is applied. The upper electrode 72 is connected to an electrode pad provided on the fixed frame 27 via the electrode wiring line 74. The piezoelectric sensor 92b has the same configuration as the piezoelectric sensor 92a.

The width, length, and the like of other components of the MMD 2B are the same as those of the MMD 2 according to the above-described embodiment.

In the present comparative example, voltage signals V1a and V1b are output from the piezoelectric sensors 91a and 91b, respectively, and voltage signals V2a and V2b are output from the piezoelectric sensors 92a and 92b, respectively. The CPU 40 generates the first angle detection signal S1 by subtracting the voltage signal V1b from the voltage signal V1a, and generates the second angle detection signal S2 by subtracting the voltage signal V2b from the voltage signal V2a.

Experimental Result

In the above-described embodiment, the first comparative example, and the second comparative example, the mirror portion 20 swung around the first axis $a_1$ and the second axis $a_2$ in an anti-phase resonance mode by driving each sample in a vacuum chamber. The angle of the mirror portion 20 was calculated from the spreading angle of the reflected light while irradiating the mirror portion 20 during driving with the laser light. Simultaneously, the lower electrode 70 of the piezoelectric sensor was set as the ground potential, and the change in the voltage value generated in the upper electrode 72 was confirmed by an oscilloscope.

In a case where the deflection angle of the mirror portion 20 around the first axis $a_1$ is $\pm 17$ degrees and the deflection angle of the mirror portion 20 around the second axis $a_2$ is $\pm 11.5$ degrees, the above-described subtraction processing was performed on the oscilloscope based on the voltage signals output from the piezoelectric sensors, thereby generating the first angle detection signal S1 and the second angle detection signal S2. In addition, an intensity of a frequency component around the first axis $a_1$ (hereinafter, referred to as a first axis component) and an intensity of a frequency component around the second axis $a_2$ (hereinafter, referred to as a second axis component), which are included in the first angle detection signal S1 and the second angle detection signal S2, were detected by using an FFT function of the oscilloscope.

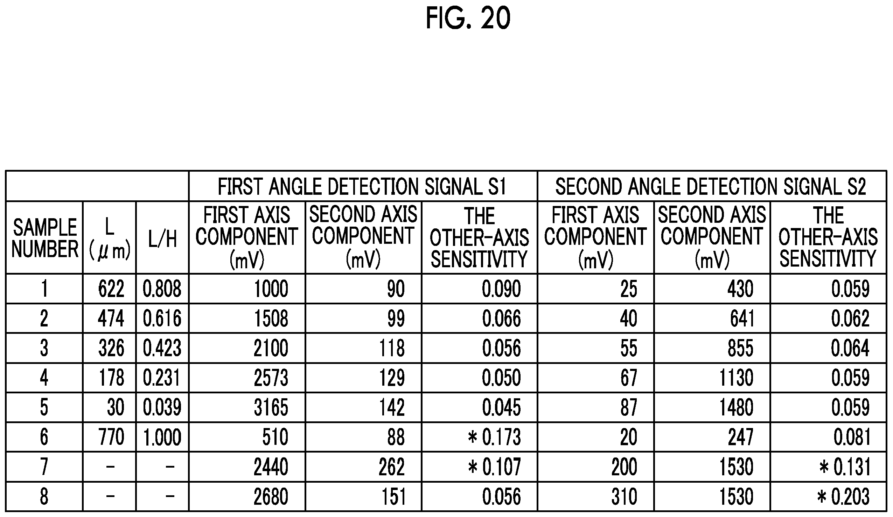

Fig. 20 shows detection results of the first angle detection signal S1 and the second angle detection signal S2 for each sample. The other-axis sensitivity in the first angle detection signal S1 is a value obtained by dividing the second axis component by the first axis component. The other-axis sensitivity in the second angle detection signal S2 is a value obtained by dividing the first axis component by the second axis component.

Sample numbers 1 to 6 are the MMD 2 according to the above-described embodiment in which ratios L/H were made different by varying the interval L. Since sample numbers 1 to 5 have L/H < 1, at least a part of the piezoelectric sensor is within a range of H/2 in the X direction from the second axis $a_2$. Since sample number 6 has L/H = 1, the piezoelectric sensor does not exist within the range of H/2 in the X direction from the second axis $a_2$. Sample number 7 is the MMD 2A according to the first comparative example. Sample number 8 is the MMD 2B according to the second comparative example.

Considering applications to a laser display for AR glass, it is desirable that the other-axis sensitivity is 0.1 or less. Among sample numbers 1 to 8, those in which both the other-axis sensitivity in the first angle detection signal S1 and the other-axis sensitivity in the second angle detection signal S2 are 0.1 or less are sample numbers 1 to 5. According to the results shown in Fig. 20, it can be seen that, in the MMD 2 according to the above-described embodiment, an accuracy of angle detection of the mirror portion 20 is improved by setting at least a part of the piezoelectric sensor to be within the range of H/2 in the X direction from the second axis $a_2$ and reducing the interval L.

In the above-described embodiment, the piezoelectric sensors 51 to 54 are provided in the vicinity of the pair of second connecting portions 26B, but, instead of the piezoelectric sensors 51 to 54, the piezoelectric sensors 51 to 54 may be provided in the vicinity of the pair of first connecting portions 26A. That is, the piezoelectric sensors 51 and 52 may be disposed in the vicinity of one of the pair of first connecting portions 26A, and may have a line-symmetrical relationship in position and shape about the first axis $a_1$. The piezoelectric sensors 53 and 54 may be disposed in the vicinity of the other of the pair of first connecting portions 26A, and may have a line-symmetrical relationship in position and shape about the first axis $a_1$. In this case, at least a part of each of the piezoelectric sensors 51 to 54 need only be within a range of H/2 in the Y direction from the first axis $a_1$. In this case, H is a length of a boundary between the fixed frame 27 and the first connecting portion 26A in the Y direction.

In addition, in the above-described embodiment, the first angle detection signal S1 is generated by subtracting the voltage signal V3 from the voltage signal V1, and the second angle detection signal S2 is generated by subtracting the voltage signal V2 from the voltage signal V1. Alternatively, the first angle detection signal S1 can be generated by adding the voltage signal V1 and the voltage signal V2, and the second angle detection signal S2 can be generated by subtracting the voltage signal V3 from the voltage signal V1. In this way, the first angle detection signal S1 and the second angle detection signal S2 can be generated by adding or subtracting the voltage signals V1 to V4.

In addition, in the above-described embodiment, the lower electrodes of the pair of piezoelectric sensors having a line-symmetrical relationship about the second axis are connected via the electrode wiring line as the metal wiring line. Alternatively, the upper electrodes of the pair of piezoelectric sensors having a line-symmetrical relationship about the second axis may be connected via the electrode wiring line as the metal wiring line. In this case, the angle detection signal can be generated by using the voltage signals obtained from the lower electrodes of the pair of piezoelectric sensors.

In the above embodiment, the hardware configuration of the driving controller 4 can be variously modified. The processing unit of the driving controller 4 may be composed of one processor or may be composed of a combination of two or more processors of the same type or different types. The processor includes, for example, a CPU, a programmable logic device (PLD), or a dedicated electric circuit. As is well known, the CPU is a general-purpose processor that executes software (program) to function as various processing units. The PLD is a processor such as a field programmable gate array (FPGA) whose circuit configuration can be changed after manufacture. The dedicated electric circuit is a processor that has a dedicated circuit configuration designed to perform a specific process, such as an application specific integrated circuit (ASIC).

Explanation of References

6] 2, 2A, 2B: micromirror device
3: light source
4: driving controller
5: surface to be scanned
10: optical scanning device
20: mirror portion
20A: reflecting surface
20B, 20C: slit
21: first support portion

21A: swing shaft
20B: coupling portion
22: movable frame
23: second support portion
23A: swing shaft
23B: coupling portion
24: first actuator
25: second actuator
26A: first connecting portion
26B: second connecting portion
27: fixed frame
30: SOI substrate
31: first silicon active layer
32: silicon oxide layer
33: second silicon active layer
40: CPU
41: ROM
42: RAM
43: light source driver
44: MMD driver
51 to 54: piezoelectric sensor
60: movable portion
70: lower electrode
71: piezoelectric film
72: upper electrode
73: insulating film
73A: opening
74, 75: electrode wiring line
76: electrode pad
81 to 84: piezoelectric sensor
91a, 91b, 92a, 92b: piezoelectric sensor
LB: light beam
N: normal line
$a_1$: first axis
$a_2$: second axis

**Claims**

1. A micromirror device (2) comprising:

   a mirror portion (20) having a reflecting surface (20A) for reflecting incident light;
   a pair of first support portions (21) that are connected to the mirror portion (20) on a first axis ($a_1$) located in a plane including the reflecting surface (20A) of the mirror portion (20) in a stationary state, and that swingably support the mirror portion (20) around the first axis ($a_1$);
   a pair of movable frames (22) that are connected to the first support portion (21) and face each other across the first axis ($a_1$);
   a pair of second support portions (23) that are connected to the movable frame (22) on a second axis ($a_2$) which is located in the plane and is orthogonal to the first axis ($a_1$), and that swingably support the mirror portion (20), the first support portion (21), and the movable frame (22) around the second axis ($a_2$);
   a driving portion that surrounds the movable frame (22);
   a fixed frame (27) that surrounds the driving portion;
   a pair of connecting portions (26A, 26B) that have a thinner thickness than the fixed frame (27) and stretch along the first axis ($a_1$) or the second axis ($a_2$) to connect the driving portion and the fixed frame (27); and
   four piezoelectric sensors (51, 52, 53, 54) each of which is formed of an upper electrode (72), a piezoelectric film (71), and a lower electrode (70), in which a shape and a position of the upper electrode (72) are in a line-symmetrical relationship about the first axis ($a_1$) and the second axis ($a_2$),
   wherein, in a case where a stretching direction of the connecting portion (26A, 26B) is a first direction, a direction orthogonal to the first direction and located in the plane is a second direction, and a length of a boundary between the fixed frame (27) and the connecting portion (26A, 26B) in the second direction is denoted by H, at least a part of each of the four piezoelectric sensors (51, 52, 53, 54) is within a range of H/2 in the second direction from an axis parallel to the first direction, out of the first axis ($a_1$) and the second axis ($a_2$), and is disposed on the fixed frame (27).

2. The micromirror device (2) according to claim 1, wherein the four piezoelectric sensors (51, 52, 53, 54) are used to generate an angle detection signal of the mirror portion (20) by adding or subtracting a voltage signal obtained from the upper electrode (72) or the lower electrode (70) of each of a pair of the piezoelectric sensors (51, 52, 53, 54) in the line-symmetrical relationship about the first axis ($a_1$) or the second axis ($a_2$).

3. The micromirror device (2) according to claim 1, wherein, in the four piezoelectric sensors (51, 52, 53, 54), the upper electrodes (72) or the lower electrodes (71) of a pair of the piezoelectric sensors (51, 52, 53, 54) in the line-symmetrical relationship about the first axis ($a_1$) or the second axis ($a_2$) are connected via a metal wiring line.

4. The micromirror device (2) according to any one of claims 1 to 3,

   wherein the driving portion includes
   a pair of first actuators (24) facing each other across the second axis ($a_2$) and having a piezoelectric element, and
   a pair of second actuators (25) surrounding the first actuator (24), facing each other across the

first axis (a$_1$), and having a piezoelectric element.

5.  The micromirror device (2) according to claim 4, wherein the driving portion allows the mirror portion (20) to swing around the first axis (a$_1$) and the second axis (a$_2$) by causing the second actuator (25) to apply a rotational torque around the first axis (a$_1$) to the mirror portion (20) and causing the first actuator (24) to apply a rotational torque around the second axis (a$_2$) to the movable frame (22).

6.  An optical scanning device (10) comprising:

    the micromirror device (2) according to any one of claims 1 to 5; and
    a processor that drives the driving portion, wherein the processor allows the mirror portion (20) to swing around the first axis (a$_1$) and the second axis (a$_2$) by providing a driving signal to the driving portion, and
    an angle detection signal of the mirror portion (20) is generated by adding or subtracting a voltage signal obtained from the upper electrode (72) or the lower electrode (70) of each of a pair of the piezoelectric sensors (51, 52, 53, 54) in the line-symmetrical relationship about the first axis (a$_1$) or the second axis (a$_2$) among the four piezoelectric sensors (51, 52, 53, 54).

**Patentansprüche**

1.  Mikrospiegelvorrichtung (2), umfassend:

    einen Spiegelabschnitt (20), der eine reflektierende Oberfläche (20A) zum Reflektieren einfallenden Lichts aufweist;
    ein Paar erster Stützabschnitte (21), die mit dem Spiegelabschnitt (20) auf einer ersten Achse (a$_1$) verbunden sind, die sich in einer Ebene befindet, die die reflektierende Oberfläche (20A) des Spiegelabschnitts (20) in einem stationären Zustand enthält, und die den Spiegelabschnitt (20) schwenkbar um die erste Achse (a$_1$) stützen;
    ein Paar beweglicher Rahmen (22), die mit dem ersten Stützabschnitt (21) verbunden sind und einander über die erste Achse (a$_1$) zugewandt sind;
    ein Paar zweiter Stützabschnitte (23), die mit dem beweglichen Rahmen (22) auf einer zweiten Achse (a$_2$) verbunden sind, die sich in der Ebene befindet und orthogonal zur ersten Achse (a$_1$) ist, und die den Spiegelabschnitt (20), den ersten Stützabschnitt (21) und den beweglichen Rahmen (22) schwenkbar um die zweite Achse (a$_2$) stützen;

einen Antriebsabschnitt, der den beweglichen Rahmen (22) umgibt;
einen feststehenden Rahmen (27), der den Antriebsabschnitt umgibt;
ein Paar Verbindungsabschnitte (26A, 26B), die eine geringere Dicke als der feststehende Rahmen (27) aufweisen und sich entlang der ersten Achse (a$_1$) oder der zweiten Achse (a$_2$) erstrecken, um den Antriebsabschnitt und den feststehenden Rahmen (27) zu verbinden; und
vier piezoelektrische Sensoren (51, 52, 53, 54), von denenj eder aus einer oberen Elektrode (72), einer piezoelektrischen Folie (71) und einer unteren Elektrode (70) besteht, in denen eine Form und eine Position der oberen Elektrode (72) in einer liniensymmetrischen Beziehung um die erste Achse (a$_1$) und die zweite Achse (a$_2$) stehen,
wobei in einem Fall, in dem eine Erstreckungsrichtung des Verbindungsabschnitts (26A, 26B) eine erste Richtung ist, eine zur ersten Richtung orthogonale und sich in der Ebene befindliche Richtung eine zweite Richtung ist und eine Länge einer Grenze zwischen dem feststehenden Rahmen (27) und dem Verbindungsabschnitt (26A, 26B) in der zweiten Richtung mit H bezeichnet ist, zumindest ein Teil jedes der vier piezoelektrischen Sensoren (51, 52, 53, 54) innerhalb eines Bereichs von H/2 in der zweiten Richtung von einer zur ersten Richtung parallelen Achse, außerhalb der ersten Achse (a$_1$) und der zweiten Achse (a$_2$) liegt und auf dem feststehenden Rahmen (27) angeordnet ist.

2.  Mikrospiegelvorrichtung (2) nach Anspruch 1, wobei die vier piezoelektrischen Sensoren (51, 52, 53, 54) verwendet werden, um ein Winkelerkennungssignal des Spiegelabschnitts (20) durch Addieren oder Subtrahieren eines Spannungssignals zu erzeugen, das von der oberen Elektrode (72) oder der unteren Elektrode (70) jedes Paars der piezoelektrischen Sensoren (51, 52, 53, 54) in der liniensymmetrischen Beziehung um die erste Achse (a$_1$) oder die zweite Achse (a$_2$) erhalten wird.

3.  Mikrospiegelvorrichtung (2) nach Anspruch 1, wobei bei den vier piezoelektrischen Sensoren (51, 52, 53, 54) die oberen Elektroden (72) oder die unteren Elektroden (71) eines Paars der piezoelektrischen Sensoren (51, 52, 53, 54) in der liniensymmetrischen Beziehung um die erste Achse (a$_1$) oder die zweite Achse (a$_2$) über eine Metallverdrahtungsleitung verbunden sind.

4.  Mikrospiegelvorrichtung (2) nach einem der Ansprüche 1 bis 3,

    wobei der Antriebsabschnitt

ein Paar erster Aktoren (24), die einander über die zweite Achse (a$_2$) zugewandt sind und ein piezoelektrisches Element aufweisen, und

ein Paar zweiter Aktoren (25) enthält, die den ersten Aktor (24) umgeben, einander über die erste Achse (a$_1$) zugewandt sind und ein piezoelektrisches Element aufweisen.

5. Mikrospiegelvorrichtung (2) nach Anspruch 4, wobei der Antriebsabschnitt das Schwingen des Spiegelabschnitts (20) um die erste Achse (a$_1$) und die zweite Achse (a$_2$) ermöglicht, indem er bewirkt, dass der zweite Aktor (25) ein Drehmoment um die erste Achse (a$_1$) auf den Spiegelabschnitt (20) ausübt, und indem er bewirkt, dass der ersten Aktor (24) ein Drehmoment um die zweite Achse (a$_2$) auf den beweglichen Rahmen (22) ausübt.

6. Optische Abtastvorrichtung (10), umfassend:

die Miktrospiegelvorrichtung (2) nach einem der Ansprüche 1 bis 5; und
einen Prozessor, der den Antriebsabschnitt antreibt,

wobei der Prozessor das Schwingen des Spiegelabschnitts (20) um die erste Achse (a$_1$) und die zweite Achse (a$_2$) ermöglicht, indem er dem Antriebsabschnitt ein Antriebssignal bereitstellt, und

ein Winkelerkennungssignal des Spiegelabschnitts (20) durch Addieren oder Subtrahieren eines Spannungssignals erzeugt wird, das von der oberen Elektrode (72) oder der unteren Elektrode (70) jedes Paars der piezoelektrischen Sensoren (51, 52, 53, 54) in der liniensymmetrischen Beziehung um die erste Achse (a$_1$) oder die zweite Achse (a$_2$) unter den vier piezoelektrischen Sensoren (51, 52, 53, 54) erhalten wird.

## Revendications

1. Dispositif à micromiroirs (2) comprenant :

une partie miroir (20) comportant une surface réfléchissante (20A) destinée à réfléchir la lumière incidente ;
une paire de premières parties supports (21) qui sont reliées à la partie miroir (20) sur un premier axe (a$_1$) situé dans un plan comprenant la surface réfléchissante (20A) de la partie miroir (20) dans un état stationnaire, et qui supporte de manière pivotante la partie miroir (20) autour du premier axe (a$_1$) ;
une paire de cadres mobiles (22) qui sont reliés à la première partie support (21) et se font face l'un l'autre à travers le premier axe (a$_1$) ;
une paire de secondes parties supports (23) qui sont reliées au cadre mobile (22) sur un second axe (a$_2$) qui est situé dans le plan et est orthogonal au premier axe (a$_1$), et qui supportent de manière pivotante la partie miroir (20), la première partie support (21) et le cadre mobile (22) autour du second axe (a$_2$) ;
une partie d'entraînement qui entoure le cadre mobile (22) ;
un cadre fixe (27) qui entoure la partie d'entraînement ;
une paire de parties liaisons (26A, 26B) qui comportent une épaisseur plus fine que le cadre fixe (27) et s'étendent le long du premier axe (a$_1$) ou du second axe (a$_2$) pour relier la partie d'entraînement et le cadre fixe (27) ; et
quatre capteurs piézoélectriques (51, 52, 53, 54) dont chacun est formé d'une électrode supérieure (72), d'un film piézoélectrique (71) et d'une électrode inférieure (70), dans lesquels une forme et une position de l'électrode supérieure (72) sont dans une relation de symétrie linéaire autour du premier axe (a$_1$) et du second axe (a$_2$),
dans un cas où une direction d'étirement de la partie liaison (26A, 26B) est une première direction, une direction orthogonale à la première direction et située dans le plan étant une seconde direction, et une longueur d'une limite entre le cadre fixe (27) et la partie liaison (26A, 26B) dans la seconde direction étant désignée par H, au moins une partie de chacun des quatre capteurs piézoélectriques (51, 52, 53, 54) se trouvant dans les limites d'une portée de H/2 dans la seconde direction à partir d'un axe parallèle à la première direction, hors du premier axe (a$_1$) et du second axe (a$_2$), et étant disposée sur le cadre fixe (27).

2. Dispositif à micromiroirs (2) selon la revendication 1, lesdits quatre capteurs piézoélectriques (51, 52, 53, 54) étant utilisés pour générer un signal de détection d'angle de la partie miroir (20) en ajoutant ou en soustrayant un signal de tension obtenu à partir de l'électrode supérieure (72) ou de l'électrode inférieure (70) de chacun d'une paire de capteurs piézoélectriques (51, 52, 53, 54) dans la relation de symétrie linéaire autour du premier axe (a$_1$) ou du second axe (a$_2$).

3. Dispositif à micromiroirs (2) selon la revendication 1, dans les quatre capteurs piézoélectriques (51, 52, 53, 54), lesdites électrodes supérieures (72) ou lesdites électrodes inférieures (71) d'une paire de capteurs piézoélectriques (51, 52, 53, 54) en relation de symétrie linaire autour du premier axe (a$_1$) ou du second axe (a$_2$) étant reliées par l'intermédiaire d'une ligne de câblage métallique.

**4.** Dispositif à micromiroirs (2) selon l'une quelconque des revendications 1 à 3,

ladite partie d'entraînement comprenant une paire de premiers actionneurs (24) se faisant face l'un l'autre à travers le second axe ($a_2$) et comportant un élément piézoélectrique, et une paire de seconds actionneurs (25) entourant le premier actionneur (24), se faisant face l'un l'autre à travers le premier axe ($a_1$), et comportant un élément piézoélectrique.

**5.** Dispositif à micromiroirs (2) selon la revendication 4, ladite partie d'entraînement permettant à la partie miroir (20) de pivoter autour du premier axe ($a_1$) et du second axe ($a_2$) en amenant le second actionneur (25) à appliquer un couple de rotation autour du premier axe ($a_1$) à la partie miroir (20) et amenant le premier actionneur (24) à appliquer un couple de rotation autour du second axe ($a_2$) au cadre mobile (22).

**6.** Dispositif de balayage optique (10) comprenant :

le dispositif à micromiroirs (2) selon l'une quelconque des revendications 1 à 5 ; et un processeur qui commande la partie d'entraînement, ledit processeur permettant à la partie miroir (20) de pivoter autour du premier axe ($a_1$) et du second axe ($a_2$) en fournissant un signal de commande à la partie d'entraînement, et un signal de détection d'angle de la partie miroir (20) étant généré en ajoutant ou en soustrayant un signal de tension obtenu à partir de l'électrode supérieure (72) ou de l'électrode inférieure (70) de chacun d'une paire de capteurs piézoélectriques (51, 52, 53, 54) dans la relation de symétrie linéaire autour du premier axe ($a_1$) ou du second axe ($a_2$) parmi les quatre capteurs piézoélectriques (51, 52, 53, 54).

EP 4 249 985 B1

# FIG. 1

# FIG. 2

FIG. 3

EP 4 249 985 B1

FIG. 4

17

FIG. 5

EP 4 249 985 B1

FIG. 6

# FIG. 7A

# FIG. 7B

# FIG. 8

FIG. 9

# FIG. 10

# FIG. 11

# FIG. 12

FIG. 13

# FIG. 14

| PARAMETER | SET VALUE | PARAMETER | SET VALUE |
|---|---|---|---|
| Lb1 | 0.790 mm | Rm | 0.750 mm |
| Wb1 | 0.230 mm | Lb0 | 0.730 mm |
| Lm1 | 0.450 mm | Wb0 | 0.220 mm |
| Lb2 | 0.490 mm | R0 | 0.230 mm |
| Wb2 | 0.425 mm | R1 | 0.065 mm |
| Lb3 | 0.500 mm | R2 | 0.075 mm |
| Wb3 | 0.215 mm | R3 | 0.050 mm |
| Wm1 | 0.110 mm | $\delta 1$ | 0.040 mm |
| Wm2 | 0.100 mm | $\delta 2$ | 0.095 mm |
| $\Delta 1$ | 0.050 mm | Wr1 | 0.165 mm |
| $\Delta 2$ | 0.040 mm | Wr2 | 0.125 mm |
| $\Delta 3$ | 0.050 mm | Wr3 | 0.148 mm |
| $\Delta 4$ | 0.050 mm | Xr1 | 1.376 mm |
| $\Delta 5$ | 0.060 mm | Xr2 | 0.990 mm |
| $\Delta 6$ | 0.070 mm | Xr3 | 1.159 mm |
| $\Delta 7$ | 0.050 mm | Wb1 | 0.132 mm |
| $\Delta 8$ | 0.065 mm | Wrim2 | 0.070 mm |
| Wac1 | 1.030 mm | Wfrm | 0.136 mm |
| Wac2 | 0.190 mm | Rrim | 0.800 mm |
| Wac3 | 0.220 mm | Rfrm | 0.870 mm |
| Wac4 | 0.170 mm | | |
| Xac1 | 2.090 mm | | |
| Xac2 | 1.840 mm | | |
| Yac1 | 2.090 mm | | |
| Yac2 | 1.900 mm | | |
| Wrim1 | 0.053 mm | | |
| $\theta$ rim | 15.5° | | |

# FIG. 15

# FIG. 16

# FIG. 17

# FIG. 18

# FIG. 19

FIG. 20

| SAMPLE NUMBER | L (μm) | L/H | FIRST ANGLE DETECTION SIGNAL S1 | | | SECOND ANGLE DETECTION SIGNAL S2 | | |
|---|---|---|---|---|---|---|---|---|
| | | | FIRST AXIS COMPONENT (mV) | SECOND AXIS COMPONENT (mV) | THE OTHER-AXIS SENSITIVITY | FIRST AXIS COMPONENT (mV) | SECOND AXIS COMPONENT (mV) | THE OTHER-AXIS SENSITIVITY |
| 1 | 622 | 0.808 | 1000 | 90 | 0.090 | 25 | 430 | 0.059 |
| 2 | 474 | 0.616 | 1508 | 99 | 0.066 | 40 | 641 | 0.062 |
| 3 | 326 | 0.423 | 2100 | 118 | 0.056 | 55 | 855 | 0.064 |
| 4 | 178 | 0.231 | 2573 | 129 | 0.050 | 67 | 1130 | 0.059 |
| 5 | 30 | 0.039 | 3165 | 142 | 0.045 | 87 | 1480 | 0.059 |
| 6 | 770 | 1.000 | 510 | 88 | * 0.173 | 20 | 247 | 0.081 |
| 7 | – | – | 2440 | 262 | * 0.107 | 200 | 1530 | * 0.131 |
| 8 | – | – | 2680 | 151 | 0.056 | 310 | 1530 | * 0.203 |

EP 4 249 985 B1

**REFERENCES CITED IN THE DESCRIPTION**

**Patent documents cited in the description**

- JP 2017132281 A
- US 8817351 B2
- US 2023035607 A1
- US 11143863 B2